# NEUE EUROPÄISCHE PATENTSCHRIFT

(11) **EP 0 123 781 B2**
(45) Veröffentlichungstag und Bekanntmachung des Hinweises auf die Entscheidung über den Einspruch: **16.02.1994**
(45) Hinweis auf die Patenterteilung: 22.03.1989
(21) Anmeldenummer: 84100353.6
(22) Anmeldetag: 14.01.1984
(51) Int. Cl.: G05D 13/34, G05D 13/30, F15B 11/04

(54) **Einrichtung zum Beeinflussen der Drehgeschwindigkeit einer Welle**
Device for influencing the rotation speed of a shaft
Dispositif pour commander la vitesse de rotation d'un arbre

(30) Priorität: 28.03.1983 DE 3311307
(43) Veröffentlichungstag der Anmeldung: 07.11.1984
(73) Patentinhaber: MANNESMANN REXROTH PNEUMATIK GMBH, 30453 Hannover (DE)
(72) Erfinder: Göttling, Helmut, D-3004 Isernhagen (DE)
(74) Vertreter: Flaig, Siegfried

(56) Entgegenhaltungen:
- EP-A- 0 034 069
- DE-A- 2 328 032
- DE-A- 2 640 898
- DE-A- 3 034 190
- DE-B- 3 113 477
- DE-U- 8 229 832
- GB-A- 1 424 749
- ÖLHYDRAULIK UND PNEUMATIK, Band 23, Nr. 11, 1979, Seiten 815-818; E. GÖLLNER "Verhalten elektrohydraulischer Geschwindigkeitsregelungen"

## Beschreibung

Die Erfindung betrifft einen Arbeitszylinder für fluidische Druckmittel gemäß dem Oberbegriff des Patentanspruchs 1.

Um die Drehgeschwindigkeit einer Welle beeinflussen zu können, ist es denkbar, entweder die Antriebsmittel für die Welle oder die Welle selbst zu beeinflussen. Wird eine Welle z.B. von einem Elektromotor angetrieben, so kann durch Verändern der dem Elektromotor zugeführten Spannung die Drehzahl des Motors und somit auch die Drehgeschwindigkeit der Welle verändert oder konstant gehalten werden.

Wird dabei eine konstante Drehgeschwindigkeit der Welle gewünscht, so ist es möglich, mittels eines Drehgeschwindigkeitsmessers die Drehgeschwindigkeit der Welle zu überwachen und über eine entsprechende Auswerte- und Regelschaltung bei Abweichungen der Drehgeschwindigkeit der Welle von einem vorbestimmten Drehgeschwindigkeitswert die Drehzahl des Elektromotors zu verändern.

Eine Einrichtung der eingangs genannten Art ist durch die deutsche Gebrauchsmusterschrift DE-U-8 229 832 vorbekannt. Bei dieser bekannten Einrichtung wirkt ein druckmittelbeaufschlagbarer Bremskolben mit einer auf einer Welle angeordneten Bremsscheibe zusammen. Zum Verändern des auf den Bremskolben einwirkenden Druckes ist an der Druckmittelkammer ein Ventil vorgesehen. Um diese Einrichtung zum Regeln der Drehgeschwindigkeit der Welle verwenden zu können, sind zusätzliche Mittel zur Erfassung der Drehgeschwindigkeit der Welle sowie entsprechende zusätzliche Steuer- bzw. Regelschaltungen erforderlich.

Der Erfindung liegt deshalb die Aufgabe zugrunde, eine Einrichtung der eingangs genannten Art so zu verbessern, daß eine Beeinflussung der Drehgeschwindigkeit der Welle mit gegenüber den bekannten Einrichtungen weniger Bauteilen und einem hohen Maß an Zuverlässigkeit möglich ist.

Diese Aufgabe wird mit der im Patentanspruch 1 angegebenen Erfindung gelöst. Weiterbildungen und vorteilhafte Ausgestaltungen der Erfindung werden in den Unteransprüchen aufgezeigt.

Die Erfindung bietet insbesondere den Vorteil, durch die Anordnung von Mitteln zum Steuern des den Bremskolben beaufschlagenden Druckes die die Drehgeschwindigkeit der Welle beeinflussende Bremse in direkte Abhängigkeit von der Drehgeschwindigkeit der Welle zu bringen.

Gemäß einer vorteilhaften Ausgestaltung der erfindungsgemäßen Einrichtung sind die Mittel zum Steuern des den Bremskolben in der Lösestellung haltenden Druckmitteldruckes in Form von sinngemäß als Schöpfeinrichtung dienenden Ausnehmungen, welche in der Bremsscheibe angeordnet sind, ausgebildet. Diese Lösung erlaubt es, auf eine besonders ausgebildete Steuerscheibe und auf besondere von der Steuerscheibe zu betätigende Schließmittel zu verzichten. Ein besonderer Vorteil der Erfindung ist noch darin zu sehen, daB keine separaten Mittel zum Feststellen der Drehgeschwindigkeit der Welle benötigt werden.

Aus der EP-A-0 034 069 ist ein Drehantrieb bekannt, welcher sich aus einem Zylinder, einer in diesem angeordneten Welle und zwei die Welle umschließenden Ringkolben zusammensetzt. Zwischen den beiden Ringkolben ist eine die Welle umgebende Gewindebuchse angeordnet. Die Welle weist in ihrem mittleren Bereich, bezogen auf ihre axiale Erstreckung, ebenfalls Gewinde auf, welches mit dem Gewinde der Gewindebuchse in Eingriff steht.

Bei einer Bewegung der Ringkolben und somit auch der Gewindebuchse in Richtung der Längsachse des Zylinders wird diese Linearbewegung in eine Drehbewegung der Welle umgesetzt.

Die beiden Ringkolben begrenzen mit ihren einander abgewandten Seiten je eine Arbeitskammer, wobei jede Arbeitskammer mit einem zugeordneten Druckmittelanschluß verbunden sind, über welchen Druckmittel in die zugehörige Arbeitskammer eingesteuert oder der Druck in dieser Arbeitskammer abgebaut werden kann.

Jedem Druckmittelanschluß ist ein federbelastetes Drosselglied zugeordnet, welches von einem oder mehreren auf dem Umfang der Welle angeordneten Nocken betätigbar ist. Das Drosselglied ist so angeordnet und so ausgebildet, daß der Druckabbau in der Arbeitskammer intermittierend gedrosselt erfolgt, wodurch eine Verringerung der Kolbengeschwindigkeit und somit auch eine Verringerung der Drehgeschwindigkeit der Welle erreicht wird, jedoch die Druckeinsteuerung in die Arbeitskammer ungedrosselt erfolgt.

Mit dieser Einrichtung ist eine Beeinflussung der Drehgeschwindigkeit der Welle bzw. eine Beeinflussung der Kolbengeschwindigkeit, in der Weise, wie es beim Gegenstand der Erfindung der Fall ist, nicht möglich.

Mit einer aus der GB-A-1 424 749 bekannten Einrichtung kann das Drehverhalten einer Welle überwacht werden. Zu diesem Zweck ist an der Welle eine Scheibe angeordnet, die mit auf einem Kreis liegenden Durchbrüchen versehen ist. Die Durchbrüche sind so angeordnet, daß jeweils zwei Durchbrüche im Winkel von 180° zueinander gelegen sind, bezogen auf den Kreis.

Auf der einen Seite der Scheibe ist ein in etwa U-förmiges Rohr so angeordnet, daß seine beiden freien Enden der Scheibe zugewandt sind. Das eine Ende des Rohres ist als Aufnehmer und das andere Ende des Rohres ist als Düse ausgebildet. Auf der dieser Seite abgewandten Seite der Scheibe sind zwei weitere Rohre vorgesehen, deren offene Enden der Scheibe zugewandt sind. Das Ende des einen Rohres ist als Düse und das Ende des anderen Rohres ist als Aufnehmer ausgebildet. Diese beiden weiteren Rohre sind so zu den freien Enden des U-förmigen Rohres angeordnet, daß die Düse des jeweils auf der einen Seite der Scheibe gelegenen Rohres dem Aufnehmer des jeweils auf der anderen Seite der Scheibe angeordneten Rohres gegenüber liegt.

Wird die Welle angetrieben, so daß sie eine Drehbewegung um ihre Längsachse ausführt, dreht sich die Scheibe mit der Welle um ihre Drehachse. Durch die Düse des dem U-förmigen Rohr gegenüberliegenden Rohres wird ein Druckmittelimpuls abgegeben, der in Richtung auf den Aufnehmer des U-förmigen Rohres zu gerichtet ist. Der Druckmittelimpuls gelangt durch das U-förmige Rohr zur Düse des U-förmigen Rohres und tritt aus dieser in Richtung auf den Aufnehmer des gegenüberliegenden Rohres zu aus dieser aus.

Dreht die Welle sich mit einer konstanten Geschwindigkeit, so gelangt der Druckimpuls ungehindert durch den einen Durchbruch in der Scheibe zum Aufnehmer des U-förmigen Rohres und weiter durch das U-förmige Rohr und den diesem Durchbruch in der Scheibe gegenüberliegenden Durchbruch zum Aufnehmer des Rohres, welches der Düse des U-förmigen Rohres gegenüberliegt.

Erhöht oder verringert sich die Drehgschwindigkeit der Welle, so gelangt nicht mehr der volle Impuls zum Aufnehmer des der Düse des U-förmigen Rohres gegenüberliegenden Rohres.

Da das volle Signal proportional ist zu einer bestimmten Drehgeschwindigkeit der Welle. wird aus einer Änderung dieses Signals eine Änderung der Drehgeschwindigkeit erkannt.

Eine Beeinflussung der Drehgeschwindigkeit der Welle ist mittels dieser bekannten Einrichtung nicht möglich.

Anhand von zwei Ausführungsbeispielen wird die Erfindung nachstehend näher erläutert.

Es zeigen:
Fig. 1 einen doppelt wirkenden Arbeitszylinder, dessen Kolben über einen Spindeltrieb eine mit einer Bremsscheibe versehene Welle antreibt, welche mit Bremsmitteln zur Regelung der Drehgeschwindigkeit der Welle zusammenwirkt, wobei in der Bremsscheibe als Schöpfeinrichtung dienende Ausnehmungen vorgesehen sind, mittels welcher der in der von einem Bremskolben begrenzten Druckmittelkammer vorhandene Druck beeinflußt wird;
Fig. 2 eine mit der in Fig. 1 gezeigten Einrichtung vergleichbare Einrichtung, bei welcher jedoch der Druck in der Druckmittelkammer über eine mit dem Einlaß der Druckmittelkammer in Verbindung stehende Ventileinrichtung beeinflußbar ist und
Fig. 3 die mit einer Steuerkurve versehene Bremsscheibe.

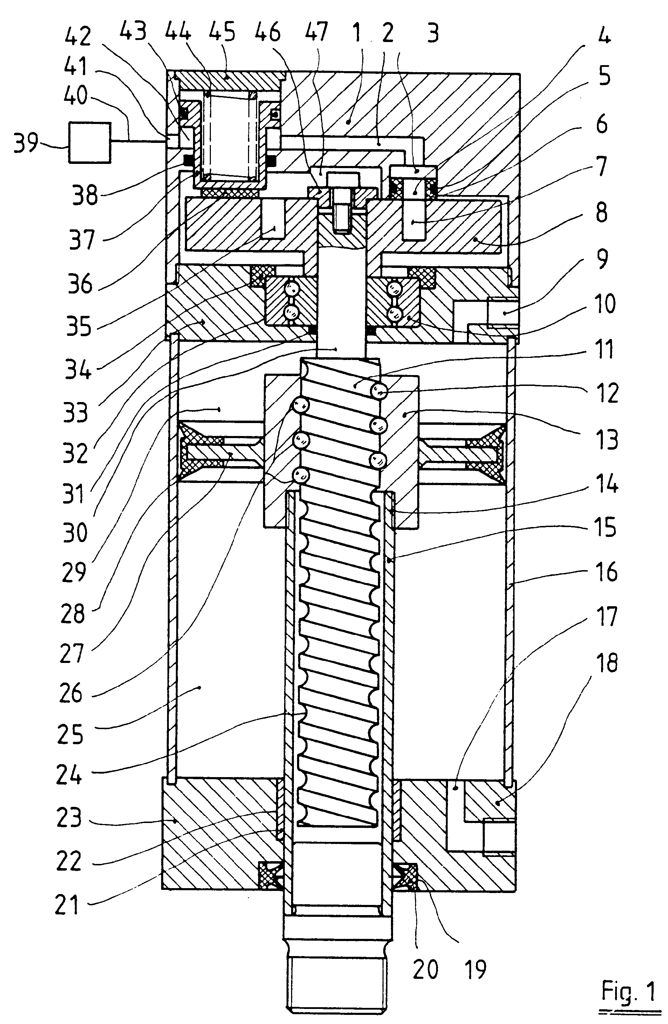

Gemäß Figur 1 ist in einem Zylinder 16, welcher von einem ersten Zylinderdeckel 1 und einem zweiten Zylinderdeckel 23 verschlossen wird, ein Arbeitskolben 13, 27, 28 verschiebbar angeordnet. Der Arbeitskolben 13, 27, 28 weist eine in Richtung seiner Längsachse verlaufende abgestufte Ausnehmung 14 auf, in deren dem zweiten Zylinderdeckel 23 zugewandten Endbereich eine Kolbenstange 15 befestigt ist. Die Kolbenstange 15 ist durch eine im zweiten Zylinderdeckel 23 vorgesehene und mit einer Gleitbüchse 21 versehene Ausnehmung 22 aus dem Zylinder herausgeführt. Ein Dichtring 20, welcher an der Kolbenstange 15 dichtend anliegt, ist in einer Ausnehmung 19 des zweiten Zylinderdeckels 23 gelagert. Durch die Ausnehmung 14 des Arbeitskolbens 13, 27, 28 ist eine Gewindespindel 11, 24 hindurchgefürt, welche sich in die rohrförmige Kolbenstange 15 hineinerstreckt. In der die Ausnehmung 14 begrenzenden Wandung sind ringförmige Vertiefungen 26 vorgesehen, in denen Kugeln 12 gelagert sind. Die Kugeln 12 stehen mit der Gewindespindel 11, 24 in Eingriff und bilden mit dem Arbeitskolben 13, 27, 28 einen Spindeltrieb.

Auf ihrer der Kolbenstange 15 abgewandten Seite weist die Gewindespindel 11, 24 einen Fortsatz 30 mit glatter Oberfläche auf. Der Fortsatz 30 erstreckt sich durch eine Ausnehmung 32 einer Wand 33 hindurch in den ersten Zylinderdeckel 1 hinein. Die Wand 33 begrenzt eine erste Arbeitskammer 29 des Zylinders 16. In der Ausnehmung 32 ist ein Rollenlager 10 angeordnet, welches zur Lagerung des Fortsatzes 30 der Gewindespindel 11, 24 dient. Ein den Fortsatz 30 dichtend umschließender Dichtring 31 ist in einer Abstufung der die Ausnehmung 32 begrenzenden Wandung gelagert und verhindert ein unbeabsichtigtes Austreten von Druckmitteln aus der ersten Arbeitskammer 29 über die Lagerstelle der Gewindespindel 11, 24, 30. Der ersten Arbeitskammer 29 gegenüber, auf der anderen Seite des Arbeitskolbens 13, 27, 28 ist eine zweite Arbeitskammer 25 vorgesehen. Die erste Arbeitskammer 29 ist über einen ersten Druckmittelanschluß 9 und die zweite Arbeitskammer 25 ist über einen zweiten Druckmittelanschluß 17 be- und entlüftbar. Das Rollenlager 10 ist in axialer Richtung durch einen elastischen Körper 34, welcher zwischen dem ersten Zylinderdeckel 1 und der den Zylinder begrenzenden Wand 33 angeordnet ist, gesichert und zusätzlich abgedichtet.

Auf dem in den Zylinderdeckel 1 hineinragenden Ende des Fortsatzes 30 der Gewindespindel 11, 24, 30 ist drehfest eine Bremsscheibe 8 angeordnet. In axialer Richtung ist die Bremsscheibe 8 mittels einer in die Stirnseite des Fortsatzes 30 eingedrehten Sicherungsschraube 46 gesichert. Die Bremsscheibe 8 weist auf ihrer dem ersten Zylinderdeckel 1 zugewandten Seite mehrere als Schöpfeinrichtung dienende Ausnehmungen 7, 35 auf, die parallel zur Längsachse der Gewindespindel 11, 24, 30 angeordnet sind.

Im ersten Zylinderdeckel 1 ist eine Druckmittelkammer 42 vorgesehen, in welcher ein Bremskolben 37 mittels eines ersten Dichtringes 38 abgedichtet verschiebbar angeordnet ist. Der Bremskolben 37 wird von einer Feder 44, welche sich an einem Verschluß 45 der Kammer 42 abstützt, in Richtung auf die Bremsscheibe 8 zu belastet. Mittels eines zweiten Dichtringes 43 ist die vom Bremskolben 37 begrenzte Druckmittelkammer 42 gegen den auf der anderen Seite des Bremskolbens 37 liegenden Federraum abgedichtet. Die Druckmittelkammer 42 ist einerseits über einen Druckmitteleinlaß 41 sowie eine Druckmittelleitung 40 mit einer Druckmittelquelle 39 verbindbar und steht andererseits über einen Druckmittelauslaß und einem Kanal 2 mit einer im ersten Zylinderdeckel 1 vorgesehenen Kammer 3 in Verbindung.

In der Kammer 3 ist eine Ringscheibe 6 mittels eines Dichtringes 5 abgedichtet verschiebbar angeordnet. Der Durchlaßquerschnitt 4 der Ringscheibe 6 ist vorzugsweise gleich dem Querschnitt der Ausnehmung 7 bzw. der Ausnehmung 35 in der Bremsscheibe 8. Die in der Bremsscheibe 8 vorgesehenen Ausnehmungen 7, 35 sind so zu der die Ringscheibe 6 aufnehmenden Kammer 3 angeordnet, daß sie mit dem Durchlaßquerschnitt 4 der Ringscheibe 6 zur Deckung bringbar sind. Die Ringscheibe 6 ist aus elastischem Material gefertigt und liegt dichtend an der Bremsscheibe 8 an.

Die in der Bremsscheibe angeordneten Ausnehmungen 7, 35 bilden zusammen mit dem Durchlaß 4 eine Ventileinrichtung über welche der Druck in der Druckmittelkammer periodisch abbaubar ist.

Die Funktion der erfindungsgemäßen Einrichtung wird im folgenden näher erläutert.

Es wird angenommen, daß die Kolbenstange 15 mit einer Geschwindigkeit von 0,5 Metern pro Sekunde aus dem Arbeitszylinder ausgefahren werden soll.

Zu diesem Zweck wird über den Druckmittelanschluß 9 die erste Arbeitskammer 29 mit Druckmittel beaufschlagt. Gleichzeitig wird von der Druckmittelquelle 39 über eine nicht dargestellte Drosselventileinrichtung Druckmittel in die vom Bremskolben 37 begrenzte Druckmittelkammer 42 eingesteuert. Der Bremskolben 37 wird vom Druckmittel gegen die Kraft der Feder 44 in Richtung auf den Federraum zu verschoben und so von der Bremsscheibe 8 getrennt. Über den Kanal 2 steht gleichzeitig Druck in der Kammer 3 an. Der Arbeitskolben 13, 27, 28 läuft nun unter Einwirkung des Druckmittels in der ersten Arbeitskammer 29 in Richtung auf die zweite Arbeitskammer 25 zu. Der Druck in der zweiten Arbeitskammer 25 baut sich über den Druckmittelanschluß 17 ab. Über den Spindeltrieb 12, 26, 11, 24 wird die geradlinige Bewegung des Arbeitskolbens 13, 27, 28 gleichzeitig in eine Drehbewegung der Gewindespindel 11, 24 bzw. des als Welle dienenden Fortsatzes 30 der Gewindespindel 11, 24, 30 und der mit dem Fortsatz 30 verbundenen Bremsscheibe 8 umgewandelt.

Hat das Gewinde der Spindel 11, 24 eine Steigung von z. B. 5 mm, so erreicht die Bremsscheibe 8 eine Drehgeschwindigkeit von 6000 Umdrehungen pro Minute. Bei jeder Umdrehung der Bremsscheibe 8 werden die als Schöpfeinrichtung dienenden Ausnehmungen 7, 35 an der mit der Ringscheibe 6 versehenen Kammer 3 vorbeigeführt und so jedesmal eine von dem Volumen der Ausnehmungen bestimmte Menge des in der Kammer 42 befindlichen Druckmittels entnommen. Über den im Zylinderdeckel 1 vorgesehenen Raum 47 und eine nicht dargestellte Entlüftung werden die als Schöpfeinrichtung dienenden Ausnehmungen 7, 35 wieder zur Atmosphäre hin entleert. Die Kammer 42 wird über die Druckmittelleitung 40 vom Druckmittel aus der Druckmittelquelle 39 wieder aufgefüllt.

Das Volumen der als Schöpfeinrichtung dienenden Ausnehmungen 7, 35 ist so bemessen, daß bei konstanter Drehgeschwindigkeit der Welle nur soviel Druckmittel aus der vom Bremskolben 37 begrenzten Druckmittelkammer 42 entnommen werden kann, wie im gleichen Zeitraum von der Druckmittelquelle über die als einstellbare Drossel dienende Drosselventileinrichtung in die Druckmittelkammer 42 nachströmen kann. Durch Verändern des Drosselquerschnittes kann so die Geschwindigkeit der Welle und somit auch die Geschwindigkeit des Arbeitskolbens 13, 27, 28 vorbestimmt werden.

Wird durch Entlasten der Kolbenstange oder durch eine unbeabsichtigte Druckerhöhung in der ersten Arbeitskammer 29 die Geschwindigkeit des Arbeitskolbens 13, 27, 28 und somit auch die Drehgeschwindigkeit der Bremsscheibe 8 erhöht, so wird von der Schöpfeinrichtung 7, 35 der Kammer 3 und somit auch der vom Bremskolben 37 begrenzten Druckmittelkammer 42 pro Zeiteinheit eine Menge des Druckmittels entnommen, die größer ist als die Menge des in die Druckmittelkammer 42 nachströmenden Druckmittels. Der daraus resultierende Druckabfall in der Druckmittelkammer 42 bewirkt, daß die Kraft der Feder 44 überwiegt und den mit einem Bremsbelag 36 versehenen Bremskolben 37 gegen die Bremsscheibe 8 drückt.

Die Drehgeschwindigkeit der Bremsscheibe 8 und somit auch die Geschwindigkeit des Arbeitskolbens 13, 27, 28 werden verringert. Durch die jetzt verringerte Drehgeschwindigkeit der Bremsscheibe 8 wird den Kammern 3 und 42 weniger Druckmittel entnommen. Der Druck in der Druckmittelkammer 42 steigt wieder an, der Druck des Bremskolbens 37 auf die Bremsscheibe 8 verringert sich und die Bremsscheibe 8 läuft mit ihrer vorbestimmten Drehgeschwindigkeit weiter. Ebenso bewegt sich der von der Bremsscheibe 8 abgebremste Arbeitskolben 13, 27, 28 mit seiner vorbestimmten Geschwindigkeit weiter auf die zweite Arbeitskammer 25 zu. Da über die von der Schöpfeinrichtung (Ausnehmungen 7, 35) den Kammern 3, 42 entnommene Druckmittelmenge eine permanente Rückmeldung über die Drehgeschwindigkeit der Bremsscheibe 8 an den Bremskolben 37 erfolgt, kann die Bremseinrichtung sehr schnell auf Drehgeschwindigkeitsänderungen reagieren.

Um die Wirksamkeit und die Genauigkeit der Einrichtung zu erhöhen, ist es möglich, mehrere Bremskolben und eine Vielzahl von als Schöpfeinrichtung dienenden Ausnehmungen vorzusehen.

Geht man von der Annahme aus, daß eine konstante Drehgeschwindigkeit der Welle dadurch erreicht wird, daß der Bremsbelag des Bremskolbens ständig mit der Bremsscheibe in Kontakt bleibt, so kann die Drehgeschwindigkeit der Welle durch völliges Lösen des Bremskolbens von der Bremsscheibe erhöht werden.

Es ist auch denkbar, die Bremskolben in radialer Richtung auf die Bremsscheibe einwirken zu lassen oder auch die als Schöpfeinrichtung dienenden Ausnehmungen auf dem Umfang der Bremsscheibe anzuordnen. Die mit der Druckmittelkammer 42 in Verbindung stehende Kammer 3 kann auch von einer Ventileinrichtung verschlossen werden, welche von einer mit der Gewindespindel 11, 24, 30 verbundenen Steuerscheibe oder von auf der Bremsscheibe 8 angeordneten Erhöhungen oder Vertiefungen betätigt wird.

Der mit der Druckmittelkammer 42 verbundene Durchlaß für das zu entnehmende Druckmittel kann selbstverständlich auch direkt an der Druckmittelkammer 42 vorgesehen werden, so daß die zusätzliche Kammer 3 und der Kanal 2 entfallen.

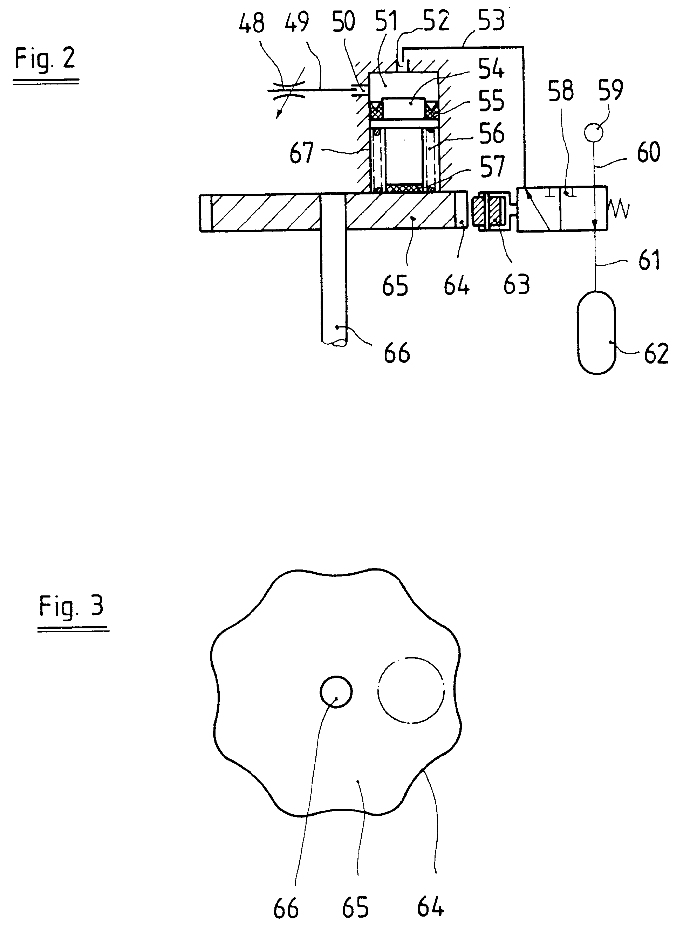

Gemäß Figur 2 wird zur Regelung der Drehgeschwindigkeit der Welle der Druck in der vom Bremskolben begrenzten Druckmittelkammer in Abhängigkeit von der Drehgeschwindigkeit der Welle verändert durch Beeinflussen der Druckmittelzufuhr zur Druckmittelkammer und des Druckmittelabflusses aus der Druckmittelkammer innerhalb eines bestimmten Zeitraumes.

In einem Gehäuse 67 ist eine Druckmittelkammer 51 vorgesehen, welche von einem mit einem Bremsbelag 57 versehenen, mittels eines Dichtringes 55 abgedichtet verschiebbar angeordneten Bremskolben 54 begrenzt wird. Auf der der Druckmittelkammer 51 abgewandten Seite des Bremskolbens 54 ist eine Druckfeder 56 angeordnet, welche den Bremskolben 54 in Richtung auf die Druckmittelkammer 51 zu beaufschlagt. Der mit dem Bremsbelag 57 versehene Bremskolben 54 ist mit einer Bremsscheibe 65 in Wirkverbindung bringbar. Die Bremsscheibe ist mit einer Welle 66 drehfest verbunden. Die Welle 66 kann z.B. von einem in einem Arbeitszylinder angeordneten Kolben über einen Spindeltrieb in Drehbewegung versetzt werden.

Über einen Druckmitteleinlaß 52 und eine Speiseleitung 53 ist die Druckmittelkammer 51 mit dem ersten Ausgang einer als 3/2-Wegeventil ausgebildeten Ventileinrichtung 58 verbunden. Die Druckmittelkammer 51 steht über einem Druckmittelauslaß 50, eine Entlastungsleitung 49 und eine einstellbare Drossel 48 mit der Atmosphäre in Verbindung. Der Eingang der Ventileinrichtung 58 ist über eine Druckmittelleitung 60 an eine Druckmittelquelle 59 angeschlossen und der zweite Ausgang der Ventileinrichtung 58 steht ber einer Druckmittelleitung 61 mit einem ein vorbestimmbares Volumen aufweisenden Druckmittelspeicher 62 in Verbindung. Die Ventileinrichtung 58 weist einen Betätigungsstössel 63 auf, welcher von einer auf dem Umfang der Bremsscheibe 65 vorgesehenen Steuerkurve 64 betätigt wird.

Figur 3 zeigt die auf der Welle 66 angeordnete Bremsscheibe 65, welche auf ihrem Umfang als Steuerkurve 64 dienende Erhöhungen und Vertiefungen aufweist.

Die Funktion der vorstehend beschriebenen Einrichtung wird nachstehend näher erläutert.

In der Abbildung befindet sich der mit dem Bremsbelag 57 versehene Bremskolben 54 in der Lösestellung.

Es wird angenommen, daß die Welle 66 und somit auch die Bremsscheibe 65 in Drehbewegung versetzt werden. Der Druckmittelspeicher 62 ist in der gezeigten Stellung der Ventileinrichtung 58 aus der Druckmittelquelle 59 über die Ventileinrichtung 58 aufgefüllt worden.

Gelangt eine Erhöhung der Steuerkurve 64 in den Bereich des Betätigungsstössels 63 der Ventileinrichtung 58, so wird der Betätigungsstössel 63 nach rechts in Richtung auf das Ventilinnere zu verschoben und so die Ventileinrichtung 58 umgeschaltet. Die Druckmittelquelle 59 ist jetzt gegen den Druckmittelspeicher 62 abgesperrt und der Druckmittelspeicher 62 ist mit der vom Bremskolben 54 begrenzten Druckmittelkammer 51 verbunden.

In der Druckmittelkammer 51 baut sich ein Druck auf, durch welchen bei Überwinden der entgegengerichtet auf den Bremskolben 54 einwirkenden Kraft der Druckfeder 56 der Bremskolben 54 in Richtung auf die Bremsscheibe 65 zu verschoben wird. Über den Druckmittelauslaß 50, die Entlastungsleitung 49 und die Drossel 48 wird gleichzeitg der Druck in der Druckmittelkammer, je nach Einstellung des Drosselquerschnittes, relativ langsam wieder abgebaut.

Überwiegt die Kraft der Druckfeder 56 wieder, so bewegt sich der mit dem Bremsbelag 57 versehene Bremskolben 54 von der Bremsscheibe 65 weg. Gelangt bei der weiteren Drehbewegung der Welle 66 und somit auch der Bremsscheibe 65 eine Vertiefung der Steuerkurve 64 in den Bereich des Betätigungsstössels 63 der Ventileinrichtung 58 so wird die Ventileinrichtung 58 wieder umgeschaltet.

Die Druckmittelquelle 59 ist jetzt mit dem Druckmittelspeicher 62 verbunden und die Druckmittelkammer 51 ist gegen den Druckmittelspeicher 62 abgesperrt. Über die Drossel 48 wird der Druck in der Druckmittelkammer 51 weiter abgebaut und der Bremskolben 54 gelangt wieder in die Lösestellung.

Der Druckmittelspeicher 62 und die Drossel 48 sind so ausgelegt, daß bei einer konstanten Drehgeschwindigkeit der Welle der Druck in der Druckmittelkammer 51 nahezu konstant gehalten wird.

Weicht die Ist-Drehgeschwindigkeit der Welle 66 von der Soll-Drehgeschwindigkeit ab, so wird durch Verändern des Druckes in der Druckmittelkammer 51 der Bremskolben 54 entweder weiter in Richtung Bremsstellung oder weiter in Richtung Lösestellung bewegt.

Erhöht sich die Drehgeschwindigkeit der Welle 66 und somit auch die Drehgeschwindigkeit der mit der Steuerkurve 64 versehenen Bremsscheibe 65, so wird wieder mehr Druckmittel in die Druckmittelkammer 51 eingesteuert als über die Drossel 48 im gleichen Zeitraum aus der Druckmittelkammer 51 abfließen kann.

Sinkt dagegen die Drehgeschwindigkeit der Welle 66 unter den vorbestimmten Drehgeschwindigkeitswert, so fließt mehr Druckmittel aus der Druckmittelkammer 51 ab als im gleichen Zeitraum vom Druckmittelspeicher 62 in die Druckmittelkammer 51 nachgesteuert werden kann.

Sowohl bei der Einrichtung gemäß Figur 1 als auch bei der Einrichtung gemäß Figur 2 wird die Veränderung des Druckes in der Druckmittelkammer und somit auch die Drehgeschwindigkeit der Welle durch die Menge des zufließenden Druckmittels zur Druckmittelkammer und die Menge des im gleichen Zeitraum abfließenden Druckmittels aus der Druckmittelkammer bestimmt.

Maßgeblich sind beim Ausführungsbeispiel gemäß Figur 1 somit das Volumen der Schöpfeinrichtung und die zwischen der Druckmittelkammer und der Druckmittelquelle angeordnete einstellbare Drossel, mittels welcher indirekt die Drehgeschwindigkeit der Welle bestimmt wird.

Bei der Einrichtung gemäß Figur 2 sind der die Druckmittelkammer 51 speisende Druckmittelspeicher 62 und die den Druckabbau in der Druckmittelkammer 51 beeinflussende einstellbare Drossel 48 die die Drehgeschwindigkeit der Welle bestimmenden Elemente.

## Patentansprüche

1. Arbeitszylinder (16) für fluidische Druckmittel, dessen Arbeitskolben (13,27,28) über einen Spindeltrieb (11,12,24) eine mit einer Bremsscheibe (8) versehene Welle (11,24;30,66) antreibt, welche mit Bremsmittel zur Regelung der Drehgeschwindigkeit der Welle zusammenwirkt, wobei auf der Welle (11,24;30,66) die Bremsscheibe (8) drehfest angeordnet ist und die Bremsmittel zumindest einen mit einem Bremsbelag (36) versehenen Bremskolben (37) aufweisen, der an die Bremsscheibe (8) anstellbar ist und wobei der Bremskolben (37) von einem Druckmittel aus einer Druckmittelkammer (42;51) entgegen der Kraft einer Feder (44;56) beaufschlagbar ist, mit einem Druckmitteleinlaß (52) zur Beaufschlagung der Druckmittelkammer (42;51) und mit einem Druckmittelauslaß (50) zur Entlüftung der Druckmittelkammer (42;51),
dadurch gekennzeichnet,
daß mittels einer Ventileinrichtung zwecks Veränderung des Druckes in der Druckmittelkammer (42;51) der Querschnitt des Druckmitteleinlasses (41;52) bzw. einer Druckmittelspeiseleitung und/oder der Querschnitt des vom Druckmitteleinlaß (41; 52) separaten Druckmittelauslasses (50) bzw. einer Druckmittelentlastungsleitung periodisch veränderbar ist und daß die Ventileinrichtung mittels des Welle (11,24;30,66) bzw. mittels eines von der Welle (11,24;30,66) angetriebenen Teils (8;63) während jeder Umdrehung der Welle mindestens einmal betätigt wird.

2. Arbeitszylinder nach Anspruch 1,
dadurch gekennzeichnet,
daß der von der Welle (11,24;30,66) angetriebene Teil (8;63) aus einem Stellglied, d.h. aus einem Betätigungsstößel (63) besteht, der mit einem Ventil zusammenwirkt.

3. Arbeitszylinder nach Anspruch 1,
dadurch gekennzeichnet,
daß die Ventileinrichtung einen von der Druckmittelkammer (42) zur Bremsscheibe (8) hin gerichteten Druckmittelauslaß-Kanal (2) aufweist, dem in der Bremsscheibe (8) zumindest eine als Schöpfeinrichtung dienende Ausnehmung (7,35) zugewandt ist, die mit der Atmosphäre verbindbar ist.

4. Arbeitszylinder nach Anspruch 3,
dadurch gekennzeichnet,
daß über das Volumen der Ausnehmungen (7,35) die pro Umdrehung der Welle (11) in die Atmosphäre gegebene Menge des Druckmittels bestimmbar ist.

5. Arbeitszylinder nach den Ansprüchen 3 und 4,
dadurch gekennzeichnet,
daß in einem Zylinderdeckel (1) am Ende des Druckmittelauslaßkanals (2) ein Dichtring (5) auf der Bremsscheibe (8) aufliegend vorgesehen ist.

6. Arbeitszylinder nach Anspruch 2,
dadurch gekennzeichnet,
daß auf der Welle (11,24) eine die Bremsscheibe (8) bildende Steuerscheibe (64) angeordnet ist, die mit dem Betätigungsstößel (63) zusammenwirkt.

7. Arbeitszylinder nach Anspruch 3,
dadurch gekennzeichnet,
daß die als Schöpfeinrichtung dienende Ausnehmung (7,35) am Umfang der Bremsscheibe (8) sich in radialer Richtung erstreckt und daß der mit der Ausnehmung (7,35) zusammenwirkende Druckmittelauslaß (50) ebenfalls radial gegenüber in einem Zylinderdeckel (1) angeordnet ist.

8. Arbeitszylinder nach den Ansprüchen 1 und 2,
dadurch gekennzeichnet,
daß die Ventileinrichtung eine Druckmittelquelle (59) mit einem ein vorbestimmbares Volumen aufweisenden Druckmittelspeicher (62) besitzt, daß an den Druckmittelspeicher (62) ein Ventil (58) angeschlossen ist, daß das Ventil (58) an die Druckmittelkammer (51) anschließbar ist, in der der Bremskolben (54) angeordnet ist, daß die Druckmittelkammer (51) einen zur Atmosphäre führenden Druckmittelauslaß (50) aufweist, der mit einer Drossel (48) versehen ist, wobei der Druckmittelspeicher (62) und die Drossel (48) so dimensioniert sind, daß bei konstanter Drehgeschwindigkeit der Welle (66) der Druck in der Druckmittelkammer (51) konstant gehalten und bei einer Abweichung der Drehgeschwindigkeit der Welle (66) von einem vorbestimmbaren Drehgeschwindigkeitswert der Druck in der Druckmittelkammer (51) entsprechend verändert wird.

9. Arbeitszylinder nach den Ansprüchen 1 bis 8,
dadurch gekennzeichnet,
daß am Druckmitteleinlaß (51;52) bzw. in der Druckmittelspeiseleitung eine Drossel angeordnet ist.

## Claims

1. Work Cylinder (16)
for fluidic pressurisers,
whereof the work cylinder (13, 27,28) transmits the power from a screw gear (11,12,24) to drive a shaft (11,24;30,66) featuring a brake disc (8) acting together with brake elements to control the speed of the shaft, the brake disc (8) being arranged to rotate in fixed position on the shaft (11,24;30,66),
the brake elements featuring at least one brake piston (37) with brake liner (36), actuatable and controllable at the brake disc (8),
the brake piston (37) being loadable by pressure medium from a pressure medium chamber (42;51) against the force of a spring (44; 56),
a pressure medium inlet (52) to feed the pressure medium chamber (42;51) and a pressure medium outlet (50) to vent the pressure medium chamber (42;51), characterised by:
a valve facility being provided to enable changing the pressure in the chamber (42;51) by means of the cross-section of the pressure medium inlet (41;52) and/or of a pressure relief line separate from the pressure medium inlet of 41;52) and/or of the pressure medium outlet (50),
and that the valve facility is actuated at least once during every revolution of the shaft (11,24;30,66) or by a part (8; 63) driven by the shaft (11,24;30,66).

2. Work cylinder, to Claim 1,
characterised by:
the part (8;63) driven by the shaft (11,24;30,66) consisting of a positioner, i.e. of an actuating ram (63) whereof the action is combined with a valve.

3. Work cylinder to Claim 1.
characterised by:
the valve facility featuring a pressure medium outlet duct (2) arranged from the pressure medium chamber (42) towards the brake disc (8) wherein at least one recess (7,35) serving as a scoop faces the outlet (2) and can be connected to the atmosphere.

4. Work cylinder to Claim 3
characterised by:
the volume of the recesses (7,35) serving to determine the volume of pressure medium released to the atmosphere with each revolution of the shaft (11).

5. Work cylinder to Claims 3 and 4
characterised by:
a cylinder cover (1) at the end of the pressure medium outlet duct (2) being provided with a sealing ring (5) supported on the brake disc (8).

6. Work cylinder to Claims 2,
characterised by:
a control disc (64) being arranged on the shaft (11,24) to form a brake disc (8) acting together with the actuating ram (63).

7. Work cylinder to Claim 3,
characterised by:
the recess serving as a scoop (7,35) extending in radial direction at the circumference of the brake disc (8) and the pressure medium outlet (50) acting together with the recess (7, 35) likewise being in radially opposed arrangement in a cylinder cover (1).

8. Work cylinder to claims 1 and 2
characterised by:
the valve facility being associated with a pressure medium source (59) and having a pressure medium accumulator (62) whereof the volume can be determined,
a valve (58) being connected to the accumulator (62) which valve (58) can be connected to the pressure medium chamber (51) in which the brake piston (54) is arranged,
the pressure medium chamber (51) featuring a pressure medium outlet (50) capable of discharging into the atmosphere and having a throttle (48), the pressure medium accumulator (62) and the throttle (48) being so dimensioned that at constant speed of the shaft (66) the pressure in the pressure medium chamber (51) is kept constant and when the speed of the shaft (66) deviates from a preset value the pressure in the pressure medium chamber (51) changing accordingly.

9. Work cylinder to Claims 1 to 8
characterised by:
a throttle being arranged in the pressure medium inlet (51; 52) and/or in the pressure medium feed line.

## Revendications

1. Vérin de travail (16) pour fluides sous pression dont le piston (13, 27, 28) entraîne, par le biais d'une tige de transmission (11, 12, 24), un arbre (11,24, 30, 66) pourvu d'un frein-disque (8), arbre agissant de pair avec des moyens de freinage pour réguler la vitesse de rotation sur lequel se trouve le frein-disque (8) solidaire de celui-ci et dont les moyens de freinage présentent pour le moins un piston (37) pourvu d'une garniture (36), piston qui est réglable sur le frein (8) et qui peut être alimenté en sens opposé à l'action d'un ressort (44, 56) par un fluide provenant d'une chambre prévue à cet effet (42, 51) dotée d'une entrée de fluides (52) alimentant la chambre (42, 51) et d'une sortie (50) pour la ventilation de celle-ci (42, 51), vérin de travail caractérisé par le fait
que, moyennant un dispositif de vanne modifiant la pression dans la chambre (42, 51), la section de l'entrée ou d'une conduite d'alimentation et/ou la section de la sortie (50) séparée de l'entrée ou d'une conduite de décharge peut être modifiée périodiquement et par le fait que le dispositif de vanne est actionné au moins une fois à chaque tour de l'arbre moyennant celui-ci (11, 24, 30, 66) ou moyennant une pièce (8, 63) entraînée par l'arbre (11, 24, 30, 66).

2. Vérin de travail selon la revendication 1 caractérisé par le fait que la pièce (8, 63) entraînée par l'arbre (11, 24, 30, 66) est composée d'un organe de réglage, c'est à dire d'un taquet d'actionnement (63) agissant de pair avec une vanne.

3. Vérin de travail selon la revendication 1 caratérisé par le fait que le dispositif de vanne présente un canal de sortie du fluide sous pression (2) partant de la chambre (42) et aboutissant au frein-disque (8) pourvu d'une encoche (7, 35) orientée vers le canal, cette encoche servant de dispositif de puisement susceptible de donner à l'atmosphère.

4. Vérin de travail selon la revendication 3 caractérisé par le fait que la quantité de fluide mise à l'atmosphère pour chaque rotation de l'arbre (11) peut être déterminée à partir du volume des creux (7, 35).

5. Vérin de travail selon les revendications 3 et 4 caractérisé par le fait que dans un couvercle (1) à l'extrémité du canal de sortie (2), un joint d'étanchéité (5) est prévu qui repose sur le frein-disque (8).

6. Vérin de travail selon la revendication 2 caractérisé par le fait qu'un disque de commande (64) faisant figure de frein-disque se trouve sur l'arbre et agit de pair avec le taquet d'actionnement.

7. Vérin de travail selon la revendication 3 caractérisé par le fait que l'encoche servant de dispositif de puisement à la circonférence du frein-disque (8) part dans le sens radial et caratérisé par le fait que la sortie (50) agissant de pair avec l'encoche (7, 35) est disposée, en face, également de manière radiale dans un couvercle (1).

8. Vérin de travail selon les revendications 1 et 2 caractérisé par le fait que le dispositif de vanne possède une source de fluides sous pression (59) avec un réservoir (62) d'un volume prédéterminable, caractérisé par le fait qu'une vanne (58) est raccordée au réservoir, par le fait que la vanne (58) est susceptible d'être raccordée à la chambre de fluides sous pression dans laquelle se trouve le piston de freinage (54), par le fait que la chambre de fluides (51) présente une sortie de mise à l'atmosphère pourvue d'un papillon (48), le réservoir (62) et le papillon (48) étant dimensionnés de manière à ce qu'à vitesse constante de l'arbre (66), la pression dans la chambre de fluides (51) soit maintenue constante et qu'en cas de non conformité de la vitesse de rotation de l'arbre (66) avec une valeur prédéfinie, la pression dans la chambre (51) varie en conséquence.

9. Vérin de travail selon les revendications 1 à 8 caractérisé par le fait qu'un papillon se trouve à l'entrée (51, 52) ou dans la conduite d'alimentation en fluides.
